# EUROPEAN PATENT APPLICATION

(11) **EP 4 101 822 A1**
(43) Date of publication of application: **14.12.2022**
(21) Application number: 21178376.6
(22) Date of filing: 08.06.2021
(51) Int. Cl.: C04B 18/16, C04B 28/00, C04B 28/02, C04B 28/04, C04B 28/06, C04B 28/08, C04B 28/10, C04B 28/12, C04B 28/14

(54) **METHODS TO IMPROVE THE WORKABILITY OF A MINERAL BINDER COMPOSITION COMPRISING AT LEAST ONE MINERAL BINDER AND ADDITIONALLY RECYCLED BINDER**

(71) Applicant: Sika Technology AG, 6340 Baar (CH)
(72) Inventor: Eberhardt, Bernd, 8400 Winterthur (CH); Dellsperger, Wolfgang, 8050 Zürich (CH); Frunz, Lukas, 8305 Dietlikon (CH); Gallucci, Emmanuel, 8048 Zürich (CH); Juilland, Patrick, 3005 Bern (CH); Muths-Kern, Denise, 8047 Zürich (CH); Pegado, Luis, 5200 Brugg (CH); Pinto, Joao, 8047 Zürich (CH)
(74) Representative: Sika Patent Attorneys

(57) **Abstract**

The present invention relates to methods to improve the workability of a mineral binder composition comprising at least one mineral binder and additionally recycled binder, said methods comprising the steps of
a) providing at least one mineral binder,
b) admixing recycled binder,
c) admixing at least one workability improver selected from the group consisting of polycarboxylates, lignosulphonates, sugar acids, sugars, or mixtures thereof, and
d) admixing water.

## Description

### Technical field

The present invention relates to the recycling of mineral binder material. Especially, the present invention relates to the materials and methods to improve the workability of a mineral binder composition comprising at least one mineral binder and additionally recycled binder. The recycled binder being available from recycling of waste construction material such as construction demolition waste, off-spec construction material or surplus construction material.

### Background of the invention

So far, a large amount of waste construction material, such as hardened concrete or mortar from demolition, off-spec production, or surplus construction material is disposed of in landfills. Only smaller quantities are partly reused as raw material for low-tech applications in the construction industry.

Moreover, the current practice is that waste construction material, especially demolition waste, is crushed and only the coarse fractions are reused, while the finer fractions are typically discarded. The reason for this is that the finer fractions, if reused, may affect the properties of fresh and hardened concrete. Therefore, the current practice can only be considered incomplete.

Current infrastructure in many parts of the world has aged and there is a great need to rebuild at least part of this infrastructure. Therefore, a large amount of waste construction material from demolition of e.g. concrete buildings, already is and will continue to become available in upcoming years. However, the disposal of waste in certain regions and countries has become increasingly expensive and difficult in due to new legislation. Additionally, waste construction material contains valuable materials such as binder with cementitious properties and aggregates that can in general be reused to produce fresh construction material. Thus, the recycling of waste construction material is an important issue.

EP 2 978 724 and EP 2 708 520 both describe methods for obtaining aggregates and/or carbonated binder from demolition debris or waste construction material. The methods comprise the steps of carbonation and comminution. EP 2 978 724 also teaches that the initial spread flow of cement paste or mortar comprising powdery mineral material, i.e. essentially carbonated binder, in addition to the mineral binder is not significantly changed as compared to cement paste or mortar without such powdery mineral material. However, the EP 2 978 724 does not provide any means to improve the initial flow and/or to maintain the workability for prolonged times of such mineral binder compositions.

There is thus a need for materials and methods to improve the workability of mineral binder compositions comprising at least one mineral binder and additionally recycled binder.

### Summary of the invention

It is an object of the present invention to improve the workability of mineral binder compositions comprising at least one mineral binder and additionally recycled binder. It is especially an object of the present invention to increase the initial flow and/or to prolong the time for which a certain flow of a mineral binder composition comprising at least one mineral binder and additionally recycled binder is maintained. The flow of the mineral binder composition in the present case refers to the slump flow as measurable according to standard EN 1015-3.

It is another object of the present invention to provide mineral binder compositions, especially mortar or concrete compositions, comprising at least one mineral binder and additional recycled binder and having improved workability. Improved workability within the present context means an increase in the initial flow and/or a prolongation in the time for which a certain flow of a mineral binder composition comprising at least one mineral binder and additionally recycled binder is maintained.

It has surprisingly been found that admixing workability improvers selected from the group consisting of polycarboxylates, lignosulphonates, sugar acids, sugars, or mixtures thereof can solve the objective of the present invention.

For example, the initial slump flow as measured according to EN 1015-3 of a mineral binder compositions produced according to a method of the present invention is increased by at least 20%, preferably at least 30 %, more preferably at least 45%, especially at least 50%, as compared to the same mineral binder composition without the at least one workability improver. At the same time the slump flow is maintained on high level over a prolonged period of time, for example over at least 30 minutes, preferably at least 60 minutes, more preferably at least 90 minutes, especially at least 120 minutes. The slump flow is maintained for a given time if its value as measured after said given time after mixing is changed by not more than 35%, preferably not more than 30%, especially not more than 25%, relative to the initial slump flow as measured directly after mixing. Additionally, the setting time was prolonged to values still acceptable for most practical applications.

The objectives of the present invention are thus solved by methods and compositions as claimed in the independent claims. Preferred embodiments of the present invention are the subject matter of the dependent claims.

### Ways of carrying out the invention

In a first aspect, the present invention relates to a method to improve the workability of a mineral binder composition comprising at least one mineral binder and additionally recycled binder, said method comprising the steps of
a) providing at least one mineral binder,
b) admixing recycled binder,
c) admixing at least one workability improver selected from the group consisting of polycarboxylates, lignosulphonates, sugar acids, sugars, or mixtures thereof, and
d) admixing water.

Within the present context, an improvement of the workability of a mineral binder composition relates to an increase of the initial slump flow and/or to a prolongation of the time for which a certain slump flow is maintained. The slump flow can be measured according to standard EN 1015-3. Thus, in a method of the present invention, the initial slump flow of a mineral binder composition comprising at least one mineral binder and additionally recycled binder and at least one workability improver is increased and/or maintenance of a certain slump flow of such a mineral binder composition over time is prolonged as compared to the initial slump flow and/or slump flow over time of the same mineral binder composition without at least one workability improver of the present invention.

According to embodiments, in a method of the present invention, the initial slump flow as measured according to EN 1015-3 is increased by at least 20%, preferably at least 30 %, more preferably at least 45%, especially at least 50%, as compared to the same mineral binder composition without the at least one workability improver.

Within the present context, a mineral binder preferably is selected from cement, gypsum, lime, magnesia, alumina, geopolymers, latent hydraulic binders, and/or pozzolanes.

Cements can in particular be Portland cements of type CEM I, CEM II, CEM III, CEM IV, and CEM V as described in standard EN 197-1, calcium aluminate cements as described in standard EN 14647, and/or calcium sulphoaluminate cements. The term "gypsum" is meant to encompass CaSO₄ in various forms, in particular CaSO₄ anhydrite, CaSO₄ α- and β- hemihydrate, and CaSO₄ dihydrate. The term "lime" is meant to encompass natural hydraulic lime, formulated lime, hydraulic lime, and air lime as described in the standard EN 459-1:2015. The term "alumina" stands for aluminum oxides, aluminum hydroxides, and/or aluminum oxy-hydroxides such as gibbsite and boehmite, calcined or flash calcined alumina, alumina resulting from the Bayer process, hydratable alumina such as amorphous mesophase alumina and rho phase alumina. Pozzolanes and latent hydraulic materials preferably are selected from the group consisting of slag, clay, calcined clay, especially metakaolin, kiln dust, microsilica, fly ash, pyrogenic silica, precipitated silica, silica fume, zeolite, rice husk ash, burnt oil shale, and natural pozzolane such as pumice, trass, and finely ground limestone.

According to embodiments, the at least one mineral binder is selected from the group consisting of Portland cement, especially of type CEM I, calcium aluminate cement, calcium sulphoaluminate cement, gypsum, hydraulic lime, air lime, geopolymers, slag, clay, finely ground limestone, and mixtures thereof.

The term "recycled binder" within the present context relates to a mineral binder which has been retrieved from waste construction material. Methods of retrieval or recycled binder from waste construction material include mechanical methods, especially crushing and/ or grinding, of the waste construction material. According to embodiments, the recycled binder is retrieved from waste construction material by means of mechanical methods, especially crushing and/or grinding. Recycled binder can be partially or fully hydrated. It is also possible that the recycled binder is partially or fully carbonated, e.g. by natural carbonation which occurs over the time of use of mineral binders. It is, however, also possible, that the recycled binder is not carbonated.

Optionally, chemical methods may be used in addition to the mechanical methods. Chemical methods to retrieve recycled binder include for example carbonation, acid treatment, and/or solution/ precipitation of waste construction material. Particularly preferred methods to retrieve recycled binder from waste construction material are chemo-mechanical methods where a mechanical and a chemical treatment are combined to retrieve the recycled binder. Mechanical and chemical treatment can be performed sequentially, simultaneously, or in multiple steps.

According to embodiments of the present invention, the recycled binder is retrieved from waste construction material by first carbonating pieces of waste construction material under a CO₂ atmosphere, followed by grinding the carbonated material to separate recycled binder from aggregates.

According to particularly preferred embodiments of the present invention the recycled binder is retrieved from waste construction material by crushing and/or grinding and simultaneously carbonating the waste construction material. Such methods are for example described in EP 2 978 724 and EP 2 708 520.

Highly preferred, a recycled binder of the present invention is separated from aggregates, fibers, metals, and wood which are present in the waste construction material. Especially, the recycled binder does not contain any aggregates. Aggregates are as defined below.

The waste construction material which is the source of the recycled binder is not particularly limited. Preferred sources of waste construction material are for example demolition waste as well as off-spec material or surplus material from production. Especially preferred sources are waste concrete or mortar, for example from demolition of concrete structures, off-spec concrete or mortar, and surplus concrete, for example surplus concrete from ready-mix plants. However, other waste construction material such as for example bricks or gypsum, e.g. gypsum render, plasterboard, gypsum screed, are also possible to use as a source for recycled binder. It is especially possible to use mixed waste construction material to retrieve recycled binder according to the present invention. Mixed waste construction material comprises two or more different mineral binders. Mixed waste construction material may result for example from demolition of infrastructure where more than one binder material has been used, e.g. cementitious bodies with a gypsum plaster, brickwork with cementitious mortar and/or render. Mixed waste construction material may also result from the formulation of concrete or mortar, i.e. where the concrete or mortar comprises more than one binder, e.g. combinations of Portland cement and slag, Portland cement and gypsum, Portland cement and aluminate cement and optionally gypsum, Portland cement and clays and optionally limestone. Mixed waste construction material may also comprise composite cements such as CEM II, CEM III, CEM IV, or CEM V as described in standard EN 197-1. Mixed waste construction material may, of course, also comprise materials other than mineral binder and which are common to construction materials. Such other materials comprise aggregates as defined below, fibers, glass, metals, wood, organic polymers.

The chemical composition of the recycled binder of the present invention depends on the chemical composition of the mineral binder or mineral binder composition present in the waste construction material. Depending on the element oxide composition of the recycled binder it may be used for different purposes. For example, where the element oxide composition is similar to the one of hydraulic, mineral binders, the recycled binder can be used as filler or supplementary cementitious material for concrete or mortars. For example, where additional calcium sulfate is contained, the recycled binder can be used for the sulfatation of mineral binders. The recycled binder has particle sizes ranging from nanometers to several micrometers. Typically, the particle size of the recycled binder is in the range of 0 - 0.250 mm, preferably 0.001 - 0.200 mm, especially 0.01 - 0.125 mm determined by sieve analysis as described in standard EN 933-1. This facilitates the separation of the recycled binder from the aggregates during retrieval.

According to preferred embodiments, the recycled binder of the present invention comprises or consists of at least one cement clinker, especially Portland cement clinker.

It is particularly preferred that the recycled binder of the present invention is a carbonated recycled binder. A carbonated recycled binder can be retrieved from a mineral binder or mineral binder composition, especially a mortar or concrete, which has undergone natural carbonation. However, preferably, the carbonated recycled binder is a mineral binder or mineral binder composition which has been treated in a carbonation process. Suitable carbonation processes are for example described in EP 2 978 724, EP 2 708 520, and WO 2015/123769.

According to certain embodiments, the carbonated recycled binder is the carbonation product of a mix of two or more mineral binders. This is especially the case where mixed waste construction material is subjected to carbonation to form the carbonated recycled binder.

Within the present context, the term "carbonation" stands for the incorporation of carbon dioxide into chemical compounds or the chemical reaction of carbon dioxide with a starting material. Carbonation of mineral binders or mineral binder compositions, e.g. cements, mortars or concrete, occurs naturally to some extent. However, the term "carbonation" here preferably stands for a process in which carbonation is deliberately enhanced or accelerated compared to the natural process. This can be achieved by providing excess carbon dioxide. Thus, "carbonation" specifically includes carbon dioxide treatment of the starting material.

In relation to mineral binders, "carbonation" stands for a process that is essentially the reverse of the chemical process of calcination, such as takes place e.g. in a cement kiln. For example, a hardened mineral binder in the form of hydraulic cement, which essentially consists of calcium, silicate and aluminium hydrates, can react with carbon dioxide to form corresponding carbonates. Carbonated mineral binders, especially carbonated Portland cements, generally have a lower pH as compared to the uncarbonated materials. The progressive carbonation of mineral binders, especially hardened mineral binders, can thus be measured by a drop in the pH value. For example, the progressive carbonation of concrete can be detected by spraying the concrete surface with an ethanolic phenolphthalein solution. Colourless areas indicate carbonated concrete, purple areas indicate uncarbonated concrete.

A carbonated recycled binder within the present context thus is a mineral binder that has been subject to carbonation. Preferably, a carbonated recycled binder within the present context is a carbonated recycled Portland cement.

A carbonated recycled binder, preferably a carbonated recycled Portland cement, of the present invention can be partially or fully carbonated, preferably fully carbonated. According to embodiments the recycled binder comprises or essentially consist of fully carbonated cement, preferably fully carbonated Portland cement.

The progress of carbonation can, for example, be determined by measuring the CO₂ partial pressure during a process where mineral binder or a mineral binder composition is subjected to a CO₂ atmosphere. If the CO₂ partial pressure drops, carbonation takes place. If the CO₂ partial pressure does not decrease further, it can be assumed that carbonation is essentially complete. Alternatively, the progress of carbonation can also be determined by measuring the pH value of the mineral binder or mineral binder composition. If the pH value of the pore solution of a mineral binder composition based on Portland cement or of an aqueous slurry of Portland cement or mineral binder composition based thereon is between 12.5 - 14 essentially no carbonation has taken place. When the pH thereof has dropped to values between 7 - 9 upon carbonation is essentially complete.

According to embodiments, the weight ratio between the at least one mineral binder and the recycled binder in a method of the present invention is between 99:1 to 5:95, preferably 94:6 to 45:55, more preferably between 94:6 to 65:35.

In a method of the present invention at least one workability improver selected from the group consisting of polycarboxylates, lignosulphonates, sugar acids, sugars, or mixtures thereof, is admixed.

The term "polycarboxylate" within the present context stands for polycarboxylic acids, polycarboxylate ethers, and polycarboxylate esters. Preferred, within the present context, are polycarboxylate ethers and polycarboxylate esters (both abbreviated as PCE). Thus, one particularly preferred type of workability improver are PCE.

PCE of the present invention comprise or consist of
(i) repeating units A of the general structure (I), 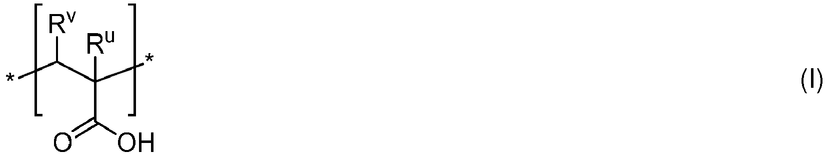 and
(ii) repeating units B of the general structure (II), 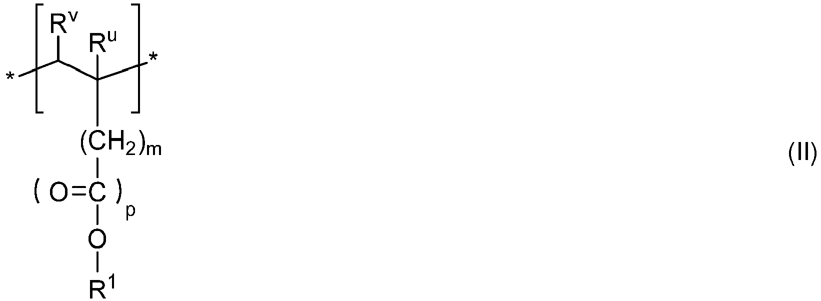
wherein
each R^{u} independently represents hydrogen or a methyl group,
each R^{v} independently represents hydrogen or COOM, wherein M is independently H, an alkali metal, or an alkaline earth metal,
m = 0, 1, 2 or 3,
p = 0 or 1,
each R¹ is independently -(CH₂)_{z}-[YO]ₙ-R⁴, where Y is C₂ to C₄ alkylene and R⁴ is H, C₁ to C₂₀ alkyl, -cyclohexyl, -alkylaryl, or -N(-Rᵢ)ⱼ-[(CH₂)_{z}-PO₃M]₃₋ⱼ, z = 0, 1, 2, 3 or 4 n = 2 - 350, j = 0, 1 or 2, Rⁱ represents a hydrogen atom or an alkyl group having 1 - 4 carbon atoms, and M represents a hydrogen atom, an alkali metal, an alkaline earth metal or an ammonium ion,
and wherein the repeating units A and B in the PCE have a molar ratio of A : B in the range of 10 : 90 - 90 :10.

According to preferred embodiments, the side chain R¹ of a PCE of the present invention is -(CH₂)_{z}-[YO]ₙ-R⁴ where z = 0, Y is C₂ alkylene, n = 11 - 350, preferably 22 - 250, and R⁴ is H or methyl.

According to further preferred embodiments, the molar ratio A : B of a PCE of the present invention is 10 : 90 - 60 : 30.

According to particularly preferred embodiments, in a polycarboxylate ether and/or polycarboxylate ester of the present invention the side chain R¹ is -(CH₂)_{z}-[YO]ₙ-R⁴ where z = 0, Y is C₂ alkylene, n = 11 - 350, preferably 22 - 250, and R⁴ is H or methyl, and the molar ratio A : B is 10 : 90 - 60 : 30.

PCE of the present invention preferably have an average molecular weight Mw in the range of 1,000 - 1,000,000, more preferably 1,500 - 500,000, most preferably 2,000 - 100,000, in particular 3,000 - 75,000 or 3,000 - 50,000 g/mol. The molar mass Mw is determined by gel permeation chromatography (GPC) with polyethylene glycol (PEG) as standard. This technique is known to the person skilled in the art.

PCEs according to the invention can be random or non-random copolymers. Non-random copolymers are in particular alternating copolymers or block or gradient copolymers or mixtures thereof.

PCEs according to the invention can be prepared by free radical polymerisation of mixtures comprising at least one olefinically unsaturated carboxylic acid monomer of the general structure (la) 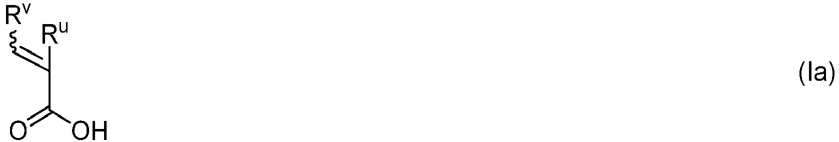 and at least one olefinically unsaturated monomer of the general structure (IIa) 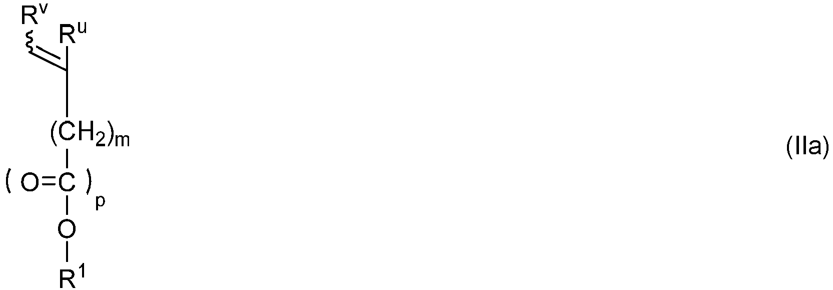 wherein R^{u}, R^{v}, m, p, and R¹ have the meanings given above and the looped bond stands for both cis- and trans-double bond isomers or their mixture.

Suitable conditions for carrying out the free radical polymerisation are known per se to the person skilled in the art and are described, for example, in EP 1 103 570. PCEs according to the invention can also be prepared by a polymer analogue reaction. In particular, PCEs according to the invention can be prepared by esterification of a homo- or copolymer comprising repeating units of the general structure (I) with polyalkylene glycols of the general structure (III)

HO-R¹ (III),

wherein R¹ is as defined above.

Suitable processes for the preparation of PCEs according to the invention by esterification are known to the skilled person per se and are described, for example, in EP 1138697 (Sika AG).

In addition to the at least one olefinically unsaturated carboxylic acid monomer of the general structure (Ia) and the at least one olefinically unsaturated macromonomer of the general structure (IIa), PCEs according to the invention may contain one or more further monomers M. These further monomers M may be selected from styrene, ethylene, propylene, butylene, butadiene, isoprene, vinyl acetate, vinyl chloride, acrylonitrile, N-vinylpyrrolidone and/or hydroxyalkyl (meth)acrylates.

It is preferred that the molar fraction of the one or more further monomers M is equal to or less than 66 mol%, preferably equal to or less than 50 mol%, more preferably equal to or less than 25 mol%, particularly preferably equal to or less than 10 mol%, especially equal to or less than 5 mol%, in each case relative to all the monomers constituting the PCE. In a very particularly preferred embodiment, the PCE is essentially free of further monomer units M.

The term "lignosulphonate" as used herein refers to a salt composed of lignosulphonate anions and suitable cations and includes in particular the substances sodium lignosulphonate (CAS No. 8061-51-6), magnesium lignosulphonate (CAS No. 8061-54-9), calcium lignosulphonate (CAS No. 8061-52-7). The cation plays no role in the efficacy in the present invention. Lignosulphonates are prepared from lignin, which in turn is produced in plants, especially woody plants.

Lignin is a three-dimensional, amorphous polymer which, unlike most other biopolymers, has no regularly ordered or repeated units. For this reason, no defined lignin structure can be named, although various models for an "average" structure have been proposed. The non-uniformity of lignin between plants of different taxa, as well as between the different tissues, cells and cell wall layers of each species, is familiar to those skilled in the art.

Lignosulphonates are formed as by-products of pulp production under the influence of sulphurous acid, which causes sulphonation and a certain degree of demethylation of the lignins. Like lignins, they are diverse in structure and composition. They are soluble in water over the entire pH range, but insoluble in ethanol, acetone and other common organic solvents.

Methods for isolating and purifying lignosulphonates are familiar to those skilled in the art. In the Howard process, calcium lignosulphonates are precipitated by adding an excess of lime to spent sulphite leachate. Lignosulphonates can also be isolated by forming insoluble quaternary ammonium salts with long-chain amines. On an industrial scale, ultrafiltration and ion exchange chromatography can be used to purify lignosulphonates.

Lignosulphonate series usable according to the invention are commercially available under various trade names, such as Ameri-Bond, Borresperse (Borregaard), Dynasperse, Kelig, Lignosol, Marasperse, Norlig (Daishowa Chemicals), Lignosite (Georgia Pacific), Reax (MEAD Westvaco), Wafolin, Wafex, Wargotan, Wanin, Wargonin (Holmens), Vanillex (Nippon Paper), Vanisperse, Vanicell, Ultrazine, Ufoxane (Borregaard), Serla-Bondex, Serla-Con, Serla-Pon, Serla-Sol (Serlachius), Collex, Zewa (Wadhof-Holmes), Raylig (ITT Rayonier).

Of course, mixtures of different lignosulphonates can also be used. Furthermore, the lignosulphonates can be in both liquid and solid form.

A "sugar acid" in the context of the present invention is a monosaccharide having a carboxyl group. It may belong to any of the classes of aldonic acids, ursonic acids, uronic acids or aldaric acids. Preferably, it is an aldonic acid. Examples of sugar acids useful in connection with the present invention include, but are not limited to gluconic acid, ascorbic acid, neuraminic acid, glucuronic acid, galacturonic acid, iduronic acid, mucilic acid and saccharic acid. The sugar acid may be in the form of the free acid or as a salt. According to embodiments, salts of sugar acids may be salts with metals of groups la, IIa, Ib, IIb, IVb, Vlllb of the periodic table of elements. Preferred salts of sugar acids are salts of alkali metals, alkaline earth metals, iron, cobalt, copper or zinc. Especially preferred are salts with sodium, potassium, and calcium. Both, _{D}- and _{L}-form of sugar acids are likewise preferred. An especially preferred sugar acid is gluconic acid and its salts, especially sodium gluconate.

According to preferred embodiments of the present invention the at least one workability improver is sodium gluconate.

A "sugar" in the sense of the present invention is a carbohydrate having an aldehyde group or an acetal moiety. In particularly preferred embodiments, the sugar belongs to the group of monosaccharides or disaccharides. Examples of sugars include, but are not limited to, glyceraldehyde, threose, erythrose, xylose, lyxose, ribose, arabinose, allose, altrose, glucose, mannose, gulose, idose, galactose, tallose, fructose, sorbose, lactose, maltose, sucrose, lactulose, trehalose, cellobiose, chitobiose, isomaltose, palatinose, mannobiose, raffinose, and xylobiose. Sugars can also be used in form of dextrines, vinasse, or molasse. Both, _{D} and _{L}-form of sugars are likewise preferred. Especially preferred sugars are fructose, mannose, maltose, glucose, galactose, dextrines, vinasse, and molasses. The term "sugar" within the present context is to be understood to also include hydrogenated sugars. A hydrogenated sugar especially is a hydrogenated starch hydrolysate or a hydrogenated glucose syrup. Hydrogenated sugars are produced by the partial hydrolysis of oligo- and polysaccharides which are subsequently hydrogenated. The result is a mixture of sugar alcohols.

It is, of course, possible within the present context to use a mixture of two or more, for example three or four, workability improvers in combination. This has the advantage that certain synergistic effects for the improvement of workability can be achieved.

It is for example possible to use a mixture of two different polycarboxylates. Two different polycarboxylates means that the polycarboxylates differ in their chemical and/or structural composition. A difference can for example be different repeating units A and/or B or a different molar ratio A : B, where A and B are as described above. A difference can also be the structure of the polycarboxylate being random vs non-random, e.g. block-wise. It is furthermore possible to use a mixture of one polycarboxylates and one sugar acid, preferably sodium gluconate. It is also possible to use a mixture of a sugar with sodium gluconate. It is also possible to use a mixture of a polycarboxylate, a sugar, and a sugar acid, preferably sodium gluconate.

According to embodiments, the at least one workability improver thus is selected from a mixture of two different polycarboxylates, or from a mixture of a polycarboxylate with a sugar acid, preferably sodium gluconate, or from a mixture of a sugar and of sodium gluconate.

According to further embodiments, the at least one workability improver thus is a mixture of a polycarboxylate, a sugar, and a sugar acid, preferably sodium gluconate.

Admixing the recycled binder, the at least one workability improver and water to the at least one mineral binder in a method of the present invention can be done by any suitable means known to the person skilled in the art. Suitable mixers are for example horizontal single shaft mixers, twin shaft paddle mixers, vertical shaft mixers, ribbon blenders, orbiting mixers, change-can mixers, tumbling vessels, vertical agitated chambers or air agitated operations. Mixing can be continuous or batch-wise.

According to embodiments, the at least one workability improver is admixed to the mixture of the at least one mineral binder and the recycled binder before the mixing water is admixed.

According to further embodiments, the at least one workability improver is admixed to the mixture of the at least one mineral binder and the recycled binder, together with the mixing water.

According to further embodiments, the at least one workability improver is first mixed with the at least on mineral binder, then the carbonate binder is admixed to this mixture, followed by admixing the water.

It is possible to admix the at least one workability improver of the present invention in the form of pure chemicals either in their liquid or solid state. It is likewise possible to admix the at least one workability improver of the present invention as a solution or dispersion in a liquid. Preferred solutions or dispersions are aqueous solutions or dispersions. It is also possible to admix the at least one workability improver in a dried form, for example adsorbed on a dry carrier or as a spray-dried powder.

According to embodiments, in a method of the present invention, where the at least one workability improver is selected from polycarboxylates, the weight of polycarboxylates admixed is between 0.1 - 3.0 w%, preferably 0.20 - 1.125 w%, more preferably from 0.40 - 0.85 w%, in each case relative to the dry weight of the recycled binder present. In such cases the weight of polycarboxylates refers to the total dry weight of all polycarboxylates present. That it is, if mixtures of two or more different polycarboxylates are present, this weight refers to the combined dry weight of such polycarboxylates.

According to further embodiments, in a method of the present invention, where the at least one workability improver is selected from lignosulphonate, the weight of lignosulphonate admixed is between 1.0 - 6.0 w%, preferably 3.5 - 5.5 w%, more preferably 4.0 - 5.0 w%, in each case relative to the dry weight of the recycled binder present.

According to further embodiments, in a method of the present invention, where the at least one workability improver is selected from sugar acids, especially from sodium gluconate, the weight of sugar acids, especially of sodium gluconate, admixed is between 0.025 - 1.0 w%, preferably 0.3 - 0.9 w%, in each case relative to the dry weight of the recycled binder present.

According to further embodiments, in a method of the present invention, where the at least one workability improver is selected from sugars, the weight of sugars admixed is between 0.5 - 2.0 w%, preferably 0.7 - 1.5 w%, in each case relative to the dry weight of the recycled binder present.

According to further embodiments, in a method of the present invention, where the at least one workability improver is selected from a mixture of a polycarboxylate with a sugar acid, preferably sodium gluconate, the weight of polycarboxylate admixed is between 0.20 - 1.125 w%, preferably 0.25 - 0.85 w%, and the weight of sugar acid, preferably of sodium gluconate, admixed is between 0.025 - 1.0 w%, preferably 0.28 - 0.5 w%, in each case relative to the dry weight of the recycled binder present.

According to further embodiments, in a method of the present invention, where the at least one workability improver is selected from a mixture of a sugar with a sugar acid, preferably sodium gluconate, the weight of sugar admixed is between 0.5 - 2.0 w%, and the weight of sugar acid, preferably of sodium gluconate, admixed is between 0.025 - 1.0 w%, preferably 0.10 - 0.50 w%, in each case relative to the dry weight of the recycled binder present.

According to further embodiments, in a method of the present invention, where the at least one workability improver is selected from a mixture of a polycarboxylate, a sugar, and a sugar acid, preferably sodium gluconate, the weight of polycarboxylate admixed is between 0.1 - 3.0 w%, preferably 0.1 - 1.125 w%, the weight of sugar admixed is between 0.1 - 2.0 w%, preferably 0.2 - 1.2 w%, and the weight of sugar acid, preferably of sodium gluconate, admixed is between 0.025 - 1.0 w%, preferably 0.07 - 0.50 w%, in each case relative to the dry weight of the recycled binder present.

In a second aspect the present invention relates to a mineral binder composition, especially a concrete or mortar, comprising
a) at least one mineral binder and a recycled binder in a weight ratio of 99:1 to 5:95, preferably 94:6 to 45:55, more preferably between 94:6 to 65:35,
b) at least one workability improver,
c) at least one aggregate,
d) optionally further additives, and
e) optionally water.

The at least one mineral binder, the recycled binder, and the at least one workability improver are as described above.

Aggregates can be any material that is non-reactive in the hydration reaction of binders. Aggregates can be any aggregate typically used for construction materials. Typical aggregates are for example rock, crushed stone, gravel, sand, especially quartz sand, river sand and/or manufactured sand, slag, recycled concrete, glass, expanded glass, hollow glass beads, glass ceramics, volcanic rock, pumice, perlite, vermiculite, quarry wastes, raw, fired or fused earth or clay, porcelain, electro-fused or sintered abrasives, firing support, silica xerogels. Aggregates may also be bio-based aggregates such as for example hemp fibers. Aggregates useful for the present invention can have any shape and size typically encountered for such aggregates. An especially preferred aggregate is sand. Sand is a naturally occurring granular material composed of finely divided rock or mineral particles. It is available in various forms and sizes. Examples of suitable sands are quartz sand, limestone sand, river sand or crushed aggregates. Suitable sands are for example described in standards ASTM C778 or EN 196-1. Of course, a mixture of aggregates is possible.

Further additives can be any additives common to the mortar and concrete industry with the exclusion of lignosulfonates, sugar acids, sugars, and polycarboxylates including PCE. Especially the further additives can be selected from plasticizers, shrinkage reducers, air entrainers, de-aerating agents, stabilizers, viscosity modifiers, thickeners, water reducers, retarders, accelerators, water resisting agents, fibers, blowing agents, defoamers, redispersible polymer powders, dedusting agents, chromate reducers, pigments, biocides, corrosion inhibitors, and steel passivating agents.

The combined amount of at least one mineral binder and of carbonate binder in a mineral binder composition of the present invention may be between 10-79 w%, preferably 15-60 w%, in each case relative to the total dry weight of the composition.

The amount of at least one workability improver in a mineral binder composition of the present invention may be between 0.025 - 6.0 w%, preferably 0.1 - 4.5 w%, more preferably 0.2 - 1.5 w%, in each case relative to the total dry weight of the composition.

The amount of the at least one aggregate in a mineral binder composition of the present invention may be between 15-84 w%, preferably 34 - 79 w%, in each case relative to the total dry weight of the composition.

The combined amount of further additives, if present, can be from 0.1 - 10 w%, in each case relative to the total dry weight of the composition.

The amount of water, if present, can be such that a water to binder ratio of between 0.1 - 0.8, preferably 0.2 - 0.6, especially 0.25 - 0.4 results.

According to embodiments, a mineral binder composition, especially a mortar or concrete, of the present invention thus comprises or consists of (in each case relative to the total dry weight of the composition)
a) 10 - 79 w%, preferably 15 - 60 w% of at least one mineral binder and of carbonate binder,
b) 0.025 - 6.0 w%, preferably 0.1 - 4.5 w%, more preferably 0.2 - 1.5 w% of at least one workability improver,
c) 15 - 84 w%, preferably 35.5 - 80.5 w% of at least one aggregate,
d) optionally 0.1 - 10 w% of further additives, and
e) optionally water in an amount to realize a water to binder ratio of between 0.1 - 0.8, preferably 0.2 - 0.6, especially 0.25 - 0.4.

A mineral binder composition, especially a mortar or concrete, of the present invention may thus be a dry or a wet composition.

A mineral binder composition of the present invention can be a concrete, especially a crane and bucket concrete, pumped concrete, pre-cast concrete, ready-mix concrete, sprayed concrete, slipform concrete, high-performance concrete, ultra-high performance concrete, self-compacting concrete, roller compacted concrete, lightweight concrete, heavyweight concrete, spun pile concrete, underwater concrete, or mass concrete. A mineral binder composition of the present invention can also be a cementitious tile adhesive, a grouting material, a self-levelling underlayment, a self-levelling overlayment, a render, a repair mortar, a masonry thin join mortar or concrete, a screed, a wall leveller for interior or exterior use, a non-shrink grout, a thin joint mortar, a waterproofing mortar, or an anchoring mortar.

A concrete is especially according to standard EN 206. A cementitious tile adhesive is especially according to standard EN 12004-1. A grouting material is especially according to standard EN 13888. A self-levelling underlayment or a self-levelling overlayment is especially according to standard EN 13813. A render is especially according to standard EN 998-1. A repair mortar is especially according to standard EN 1504-3. A masonry mortar or concrete is especially according to standards EN 998-2 and EN 206-1. A screed is especially according to standard EN 13813. A non-shrink grout is especially according to standard EN 1504-6. A thin joint mortar is especially according to standard EN 998-2. A waterproofing mortar is especially according to standard EN 1504-2. An anchoring mortar is especially according to standard EN 1504-6.

In another aspect the present invention also relates to an admixture for the improvement of workability of a mineral binder composition comprising recycled binder, said admixture comprising or consisting of
a) at least one workability improver selected from polycarboxylates, lignosulphonate, sugar acids, sugars, or mixtures thereof, and
b) optionally water.

A mineral binder, a recycled binder, polycarboxylates, lignosulphonate, sugar acids, and sugars are as described above.

The amount of water in an admixture of the present invention may vary in a wide range. Preferably, the amount of water, if present, is between 1 - 90 w%, preferably 10-66 w%, more preferably 15-50 w%, in each case relative to the total weight of the admixture.

An admixture of the present invention may additionally comprise further additives common to the mortar and concrete industry with the exclusion of lignosulfonates, sugar acids, sugars, and polycarboxylates including PCE. Especially the further additives can be selected from plasticizers, shrinkage reducers, air entrainers, de-aerating agents, stabilizers, viscosity modifiers, thickeners, water reducers, retarders, accelerators, water resisting agents, fibers, blowing agents, defoamers, redispersible polymer powders, dedusting agents, chromate reducers, pigments, biocides, corrosion inhibitors, and steel passivating agents.

According to embodiments, a mineral binder composition as described above and where water is present has an initial slump flow as measured according to EN 1015-3 which is increased by at least 20%, preferably at least 30 %, more preferably at least 45%, especially at least 50%, as compared to the same mineral binder composition without the at least one workability improver.

In a last aspect, the present invention relates to a hardened mineral binder composition, preferably as part of a building, obtained by curing a mineral binder composition as described above and where water is present.

Preferably, the curing is done at a temperature of between 5 - 40 °C and at atmospheric pressure. It is, in principle, also possible to cure the mineral binder composition at higher temperatures and/or at increased pressures, e.g. in an autoclave.

The following examples will provide the skilled person with further embodiments. They are not intended to limit the invention.

### Examples

### Materials:

- CEM I 42.5 N, CEM II/A-LL 42.5 N, and CEM II/B-LL 42.5 N according to standard EN 197-1 supplied from Vigier
- recycled binder was obtained as follows:
   CEM I 42.5 N was suspended in water at 23°C until fully hardened. The hardened product was dried at 80 °C, conditioned at 20°C / 65% r.h. until reaching a constant weight, and then ground in a pin mill to a particle size < 0.063 mm. The powdered material was stored in a reactor at 23°C / 65% r.h. the powder was gently agitated and a continuous gas stream of gaseous CO₂ was passed through the reactor. The carbonation process was followed by measuring the amount of carbonates by thermogravimetric analysis (TGA). Carbonates in TGA are determined from the mass loss in the temperature range of 500 - 800 °C. Sufficient carbonation was assumed if the TGA indicated the presence of 55 - 60 w% of carbonates.
- PCE-1 is a co(poly-acrylate-poly-methacrylate) with Mn = 5000 g/mol and methoxy-terminated polyethyleneoxide side chain (Mn = 3000 g/mol); molar ratio of carboxylate : side chain = 4.5
- PCE-2 is a co(poly-acrylate-poly-methacrylate) with Mn = 5000 g/mol and methoxy-terminated polyethyleneoxide side chain (Mn = 1000 g/mol); molar ratio carboxylate : side chain = 1.6
- PCE-3 is a copolymer of methallyl alcohol started polyethyleneoxide (Mn = 2400 g/mol), acrylic acid, and 2-hydroxyacrylate in a molar ratio of 0.625 : 0.416 : 2.80
- PCE-4 is a co(poly-acrylate-poly-methacrylate) with Mn = 5000 g/mol and methoxy-terminated polyethyleneoxide side chain (Mn = 1000 g/mol); molar ratio carboxylate : side chain = 0.8
- PCE-5 is a co(poly-acrylate-poly-methacrylate) with Mn = 5000 g/mol and methoxy-terminated polyethyleneoxide side chain (Mn = 500 g/mol); molar ratio carboxylate: side chain = 1.0
- Ligno: sodium lignosulfonate from LignoStar group BV
- Gluco: sodium gluconate from Sigma Aldrich (>99%)
- melasse: untreated melasse from sugar production from sugar cane (solid content ca. 80 Gew.-%; pH = 5.5)
- Polysorb: hydrogenated glucose syrup, 12 w% Sorbitol content (Polysorb 70/12)

### Measurements:

- Slump flow was determined following EN 1015-3 with a cone of 39 cm³ volume at the times after the end of the mixing process indicated in below tables. Slump flow of <60 mm was not measured and is in any case indicated as "<60" in below tables.
- Start of setting was determined using an isothermal conduction calorimetry method following ASTM C1702-17. For this purpose, the heat of hydration was recorded with a CAL 8000 device from Calumetrix. The start of setting corresponds to the point on the curve of the heat flow over time at which a first local minimum was measured.

### Example 1

In example 1 the effect on a cement paste of various workability improvers used singly was evaluated. CEM I 42.5 N was used as mineral binder and mixed dry with recycled binder until visually homogeneous. The mixing ratio by weight of mineral binder: recycled binder was 82:18. The mix of mineral binder and recycled binder was mixed with an amount of water to give a water: binder weight ratio of 0.45. Mixing was done for 2 min with a propeller mixer at a speed of 2.5 - 5.5 m/s. The respective workability improver was added together with the mixing water in the amount as indicated in below table 1.

The following table 1 shows an overview of the results. Example 1-1 is a comparative example and not according to the present invention. Examples 1-2 - 1-22 are according to the present invention.

**Table 1: Examples 1-1 - 1-22; dosages are given in w% relative to the combined dry weight of mineral binder and recycled binder**

| Example | Workability improver | Dosage | Slump flow [mm] | | | | | Start setting [min] |
|---|---|---|---|---|---|---|---|---|
| | | | 3 min | 30 min | 60 min | 90 min | 120 min | |
| 1-1 | None | 0 | 79 | 68 | <60 | <60 | <60 | 75 |
| 1-2 | PCE-1 | 0.05 | 117 | 102 | 84 | 74 | <60 | n.m. |
| 1-3 | PCE-1 | 0.1 | 140 | 116 | 98 | 82 | 67 | n.m. |
| 1-4 | PCE-2 | 0.075 | 120 | 116 | 112 | 103 | 86 | 120 |
| 1-5 | PCE-2 | 0.1 | 120 | 127 | 124 | 116 | 108 | 150 |
| 1-6 | PCE-3 | 0.1 | 102 | 114 | 152 | 126 | 120 | 120 |
| 1-7 | PCE-3 | 0.15 | 111 | 123 | 144 | 148 | 142 | 150 |
| 1-8 | PCE-3 | 0.2 | 104 | 132 | 153 | 159 | 166 | 180 |
| 1-9 | PCE-4 | 0.1 | 104 | 113 | 116 | 114 | 102 | 120 |
| 1-10 | PCE-4 | 0.15 | 113 | 121 | 123 | 123 | 118 | 150 |
| 1-11 | PCE-4 | 0.2 | 115 | 125 | 124 | 127 | 123 | 180 |
| 1-12 | PCE-5 | 0.1 | 114 | 108 | 96 | 84 | 81 | 120 |
| 1-13 | PCE-5 | 0.15 | 118 | 121 | 113 | 106 | 100 | 150 |
| 1-14 | PCE-5 | 0.2 | 121 | 128 | 130 | 123 | 116 | 150 |
| 1-15 | Ligno | 0.6 | 106 | 98 | 93 | 79 | <60 | 300 |
| 1-16 | Ligno | 0.8 | 113 | 105 | 98 | 96 | 81 | 420 |
| 1-17 | Ligno | 1.0 | 118 | 113 | 106 | 97 | 84 | 540 |
| 1-18 | Gluco | 0.05 | 119 | 100 | 95 | 88 | 79 | 150 |
| 1-19 | Gluco | 0.1 | 128 | 110 | 102 | 98 | 93 | 300 |
| 1-20 | Gluco | 0.15 | 133 | 111 | 108 | 103 | 97 | 420 |
| 1-21 | Melasse | 0.2 | 131 | 106 | 102 | 98 | 85 | 480 |
| 1-22 | Melasse | 0.4 | 142 | 118 | 110 | 106 | 101 | 540 |

| | | | | | | | | |
|---|---|---|---|---|---|---|---|---|
| n.m.: not measured | | | | | | | | |

It can be seen from the above table 1 that all workability improvers tested significantly increased the initial slump flow and also were able to maintain the slump for prolonged periods of time as compared to a composition comprising the same mineral binder and recycled binder but no workability improver. In fact, in most cases the initial slump flow and slump flow retention when using workability improvers according to the present invention was improved over the slump flow performance of a cement paste based on CEM II/A-LL with a water to cement ratio of 0.45.

The setting times measured were still within an acceptable range for most practical applications. In case, where the targeted application is ready-mix concrete, the increased setting times might even be beneficial.

### Example 2

Example 2 was conducted in the same way as example 1 with the only exception that the mixing ratio by weight of mineral binder: recycled binder was 65:35.

The following table 2 shows an overview of the results. Example 2-1 is a comparative example and not according to the present invention. Examples 2-2 - 2-7 are according to the present invention.

**Table 2: Examples 2-1 - 2-7; dosages are given in w% relative to the combined dry weight of mineral binder and recycled binder**

| Example | Additive | Dosage | Slump flow [mm] | | | | | Start setting [min] |
|---|---|---|---|---|---|---|---|---|
| | | | 3 min | 30 min | 60 min | 90 min | 120 min | |
| 2-1 | None | 0 | <60 | <60 | <60 | <60 | <60 | 60 |
| 2-2 | PCE-1 | 0.1 | 116 | 83 | <60 | <60 | <60 | n.m. |
| 2-3 | PCE-2 | 0.075 | 96 | 63 | <60 | <60 | <60 | 75 |
| 2-4 | PCE-2 | 0.1 | 101 | 74 | <60 | <60 | <60 | 75 |
| 2-5 | PCE-2 | 0.2 | 135 | 128 | 116 | 95 | 74 | 90 |
| 2-6 | PCE-4 | 0.25 | 88 | 116 | 125 | 126 | 110 | 180 |
| 2-7 | PCE-4 | 0.4 | 110 | 138 | 146 | 145 | 143 | 270 |

| | | | | | | | | |
|---|---|---|---|---|---|---|---|---|
| n.m.: not measured | | | | | | | | |

It can be seen from the above table 2 that all workability improvers tested significantly increased the initial slump flow and also were able to maintain the slump for prolonged periods of time as compared to a composition comprising the same mineral binder and recycled binder but no workability improver. In fact, for examples 2-2, 2-5, and 2-7 the initial slump flow was even increased over the initial slump flow of a cement paste based on CEM II/B-LL with a water to cement ratio of 0.45. And for examples 2-5, 2-6, and 2-7 the slump flow retention was improved over the performance of a cement paste based on CEM II/B-LL with a water to cement ratio of 0.45.

The setting times measured were still within an acceptable range for most practical applications. In case, where the targeted application is ready-mix concrete, the increased setting times might even be beneficial.

### Example 3

In example 3 the effect on a cement paste of various workability improvers used in combination was evaluated. Example 3 was conducted in the same way as example 1 with the only exception that combinations of workability improvers were used.

The following table 3 shows an overview of the results. Examples 3-1 - 3-23 are according to the present invention.

**Table 3: Examples 31 - 3-23; dosages are given in w% relative to the combined dry weight of mineral binder and recycled binder**

| Example | Additive | Dosage | Slump flow [mm] | | | | | Start setting [min] |
|---|---|---|---|---|---|---|---|---|
| | | | 3 min | 30 min | 60 min | 90 min | 120 min | |
| 3-1 | PCE-1 | 0.025 | 129 | 118 | 107 | 91 | 81 | 120 |
| | PCE-2 | 0.05 | | | | | | |
| 3-2 | PCE-1 | 0.04 | 118 | 113 | 110 | 109 | 98 | 150 |
| | PCE-4 | 0.04 | | | | | | |
| 3-3 | PCE-1 | 0.05 | 121 | 126 | 128 | 123 | 116 | 180 |
| | PCE-3 | 0.075 | | | | | | |
| 3-4 | PCE-1 | 0.05 | 126 | 139 | 136 | 129 | 110 | 150 |
| | PCE-4 | 0.05 | | | | | | |
| 3-5 | PCE-2 | 0.15 | 103 | 112 | 113 | 78 | 63 | 180 |
| | Gluco | 0.025 | | | | | | |
| 3-6 | PCE-2 | 0.15 | 109 | 130 | 126 | 107 | 92 | 240 |
| | Gluco | 0.05 | | | | | | |
| 3-7 | PCE-2 | 0.15 | 115 | 124 | 125 | 118 | 106 | 300 |
| | Gluco | 0.075 | | | | | | |
| 3-8 | PCE-2 | 0.15 | 125 | 108 | 106 | 90 | 78 | 180 |
| | Polysorb | 0.025 | | | | | | |
| 3-9 | PCE-2 | 0.15 | 126 | 121 | 117 | 90 | 86 | 240 |
| | Polysorb | 0.05 | | | | | | |
| 3-10 | PCE-2 | 0.15 | 128 | 134 | 128 | 104 | 94 | 300 |
| | Polysorb | 0.075 | | | | | | |
| 3-11 | PCE-2 | 0.15 | 124 | 136 | 132 | 115 | 101 | 210 |
| | Gluco | 0.05 | | | | | | |
| | Polysorb | 0.025 | | | | | | |
| 3-12 | PCE-2 | 0.15 | 127 | 138 | 129 | 113 | 92 | 240 |
| | Gluco | 0.05 | | | | | | |
| | Polysorb | 0.05 | | | | | | |
| 3-13 | PCE-2 | 0.15 | 125 | 128 | 121 | 87 | 83 | 240 |
| | Gluco | 0.025 | | | | | | |
| | Polysorb | 0.075 | | | | | | |
| 3-14 | PCE-3 | 0.05 | 118 | 118 | 114 | 116 | 112 | 210 |
| | Gluco | 0.05 | | | | | | |
| 3-15 | PCE-3 | 0.075 | 121 | 124 | 128 | 131 | 130 | 240 |
| | Gluco | 0.05 | | | | | | |
| 3-16 | PCE-3 | 0.05 | 117 | 118 | 121 | 118 | 114 | 150 |
| | Polysorb | 0.05 | | | | | | |
| 3-17 | PCE-3 | 0.075 | 124 | 127 | 130 | 132 | 128 | 210 |
| | Polysorb | 0.05 | | | | | | |
| 3-18 | PCE-4 | 0.1 | 123 | 126 | 124 | 120 | 117 | 150 |
| | Gluco | 0.025 | | | | | | |
| 3-19 | PCE-4 | 0.1 | 131 | 127 | 125 | 122 | 120 | 120 |
| | Polysorb | 0.05 | | | | | | |
| 3-20 | PCE-5 | 0.1 | 116 | 115 | 113 | 109 | 107 | 150 |
| | Gluco | 0.05 | | | | | | |
| 3-21 | PCE-5 | 0.1 | 112 | 109 | 106 | 98 | 90 | 120 |
| | Gluco | 0.025 | | | | | | |
| 3-22 | PCE-5 | 0.1 | 132 | 126 | 121 | 114 | 106 | 150 |
| | Polysorb | 0.05 | | | | | | |
| 3-23 | Molasse | 0.1 | 133 | 117 | 107 | 103 | 91 | 360 |
| | Gluco | 0.025 | | | | | | |

It can be seen from the above table 1 that all combinations of workability improvers tested significantly increased the initial slump flow and also were able to maintain the slump for prolonged periods of time as compared to a composition comprising the same mineral binder and recycled binder but no workability improver.

The setting times measured were still within an acceptable range for most practical applications. In case, where the targeted application is ready-mix concrete, the increased setting times might even be beneficial.

### Example 4

Example 4 was conducted in the same way as example 3 with the only exception that the mixing ratio by weight of mineral binder: recycled binder was 65:35.

The following table 4 shows an overview of the results. Examples 4-1 - 4-12 are according to the present invention.

**Table 4: Examples 4-1 - 4-12; dosages are given in w% relative to the combined dry weight of mineral binder and recycled binder**

| Example | Additive | Dosage | Slump flow [mm] | | | | | Start setting [min] |
|---|---|---|---|---|---|---|---|---|
| | | | 3 min | 30 min | 60 min | 90 min | 120 min | |
| 4-1 | PCE-1 | 0.025 | 129 | 118 | 107 | 91 | 81 | 120 |
| | PCE-2 | 0.05 | | | | | | |
| 4-2 | PCE-1 | 0.08 | 126 | 120 | 118 | 112 | 88 | 120 |
| | PCE-3 | 0.08 | | | | | | |
| 4-3 | PCE-1 | 0.075 | 110 | 123 | 110 | 95 | 78 | 120 |
| | PCE-3 | 0.125 | | | | | | |
| 4-4 | PCE-1 | 0.1 | 138 | 132 | 126 | 118 | 112 | 180 |
| | PCE-4 | 0.1 | | | | | | |
| 4-5 | PCE-1 | 0.05 | 117 | 120 | 116 | 98 | 80 | 180 |
| | PCE-4 | 0.15 | | | | | | |
| | Gluco | 0.025 | | | | | | |
| 4-6 | PCE-2 | 0.15 | 126 | 128 | 122 | 93 | 78 | 150 |
| | Gluco | 0.075 | | | | | | |
| 4-7 | PCE-2 | 0.1 | 108 | 127 | 124 | 122 | 108 | 240 |
| | Gluco | 0.15 | | | | | | |
| 4-8 | Molasse | 0.2 | 112 | 110 | 110 | 95 | 90 | 300 |
| | PCE-2 | 0.075 | | | | | | |
| 4-9 | PCE-3 | 0.1 | 104 | 110 | 114 | 112 | 96 | 270 |
| | Gluco | 0.1 | | | | | | |
| 4-10 | PCE-3 | 0.05 | 114 | 121 | 118 | 115 | 110 | 120 |
| | Molasse | 0.4 | | | | | | |
| 4-11 | PCE-3 | 0.075 | 115 | 120 | 126 | 124 | 112 | 150 |
| | Molasse | 0.4 | | | | | | |
| 4-12 | PCE-3 | 0.05 | 107 | 118 | 130 | 116 | 110 | 180 |
| | Molasse | 0.4 | | | | | | |
| | Gluco | 0.025 | | | | | | |

It can be seen from the above table 1 that all combinations of workability improvers tested significantly increased the initial slump flow and also were able to maintain the slump for prolonged periods of time as compared to a composition comprising the same mineral binder and recycled binder but no workability improver. The setting times measured were still within an acceptable range for most practical applications. In case, where the targeted application is ready-mix concrete, the increased setting times might even be beneficial.

## Claims

1. Method to improve the workability of a mineral binder composition comprising at least one mineral binder and additionally recycled binder, said method comprising the steps of
a) providing at least one mineral binder,
b) admixing recycled binder,
c) admixing at least one workability improver selected from the group consisting of polycarboxylates, lignosulphonates, sugar acids, sugars, or mixtures thereof, and
d) admixing water.

2. Method according to claim 1, **characterized in that** the recycled binder comprises or essentially consist of fully carbonated cement, preferably fully carbonated Portland cement.

3. Method according to any of the preceding claims, **characterized in that** the weight ratio between the at least one mineral binder and the recycled binder is between 99:1 to 5:95, preferably 94:6 to 45:55, more preferably between 94:6 to 65:35.

4. Method according to claim 1, **characterized in that** the at least one workability improver is a polycarboxylate comprising or consisting of
a) repeating units A of the general structure (I), 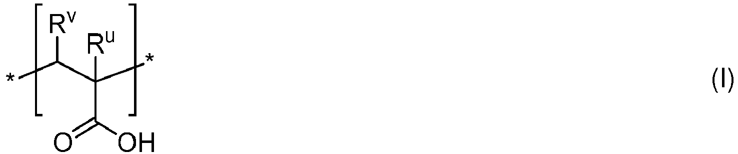 and
b) repeating units B of the general structure (II), 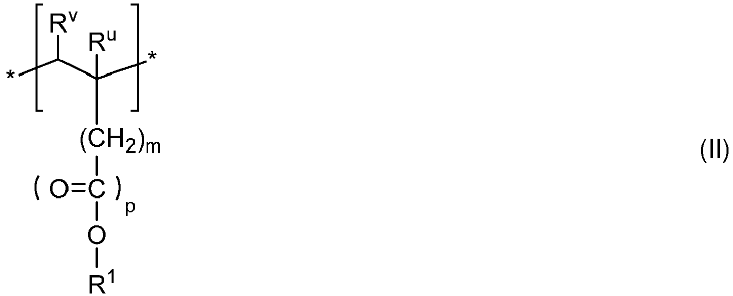 wherein
each R^{u} independently represents hydrogen or a methyl group,
each R^{v} independently represents hydrogen or COOM, wherein M is independently H, an alkali metal, or an alkaline earth metal,
m = 0, 1, 2 or 3,
p = 0 or 1,
each R¹ is independently -(CH₂)_{z}-[YO]ₙ-R⁴, where Y is C₂ to C₄ alkylene and R⁴ is H, C₁ to C₂₀ alkyl, -cyclohexyl, -alkylaryl, or -N(-Rᵢ)ⱼ-[(CH₂)_{z}-PO₃M]₃₋ⱼ, z = 0, 1, 2, 3 or 4 n = 2 - 350, j = 0, 1 or 2, Rⁱ represents a hydrogen atom or an alkyl group having 1 - 4 carbon atoms, and M represents a hydrogen atom, an alkali metal, an alkaline earth metal or an ammonium ion,
and wherein the repeating units A and B in the PCE have a molar ratio of A : B in the range of 10 : 90 - 90 :10.

5. Method according to claim 1, **characterized in that** the at least one workability improver is sodium gluconate.

6. Method according to claim 1, **characterized in that** the at least one workability improver is selected from a mixture of two different polycarboxylates, or from a mixture of a polycarboxylate with a sugar acid, preferably sodium gluconate, or from a mixture of a sugar and of sodium gluconate.

7. Method according to claim 1, **characterized in that** the at least one workability improver is a mixture of PCE, sugar, and a sugar acid, preferably sodium gluconate.

8. Method according to at least one of the preceding claims, **characterized in that** the at least one mineral binder is selected from the group consisting of Portland cement, especially of type CEM I, calcium aluminate cement, calcium sulphoaluminate cement, gypsum, hydraulic lime, air lime, geopolymers, slag, clay, finely ground limestone, and mixtures thereof.

9. Method according to at least one of claims 1 - 8, **characterized in that** the at least one workability improver is selected from polycarboxylates and that the weight of polycarboxylates admixed is between 0.1 - 3.0 w%, preferably 0.20 - 1.125 w%, more preferably from 0.40 - 0.85 w%, in each case relative to the dry weight of the recycled binder present.

10. Method according to at least one of claims 1 - 8, **characterized in that** the at least one workability improver is selected from sugar acids, especially from sodium gluconate, and that the weight of sugar acids, especially of sodium gluconate, admixed is between 0.025 - 1.0 w%, preferably 0.3 - 0.9 w%, in each case relative to the dry weight of the recycled binder present.

11. Method according to at least one of claims 1 - 8, **characterized in that** the at least one workability improver is selected from a mixture of a polycarboxylate with a sugar acid, preferably sodium gluconate, and that the weight of polycarboxylate admixed is between 0.20 - 1.125 w%, preferably 0.25 - 0.85 w%, and that the weight of sugar acid, preferably of sodium gluconate, admixed is between 0.025 - 1.0 w%, preferably 0.28 - 0.5 w%, in each case relative to the dry weight of the recycled binder present.

12. Method according to at least one of claims 1 - 8, **characterized in that** the at least one workability improver is selected from a mixture of a polycarboxylate, a sugar, and a sugar acid, preferably sodium gluconate, and that the weight of polycarboxylate admixed is between 0.1 - 3.0 w%, preferably 0.1 - 1.125 w%, and that the weight of sugar admixed is between 0.1 - 2.0 w%, preferably 0.2 - 1.2 w%, and that the weight of sugar acid, preferably of sodium gluconate, admixed is between 0.025 -1.0 w%, preferably 0.07 - 0.50 w%, in each case relative to the dry weight of the recycled binder present.

13. Mineral binder composition, especially a concrete or mortar, comprising
a) at least one mineral binder and a recycled binder in a weight ratio of 99:1 to 5:95, preferably 94:6 to 45:55, more preferably between 94:6 to 65:35,
b) at least one workability improver,
c) at least one aggregate,
d) optionally further additives, and
e) optionally water.

14. Mineral binder composition according to claim 13, **characterized in that** water is present and **in that** the initial slump flow as measured according to EN 1015-3 is increased by at least 20%, preferably at least 30 %, more preferably at least 45%, especially at least 50% as compared to the same mineral binder composition without the at least one workability improver.

15. Hardened mineral binder composition, preferably as part of a building, obtained by curing a mineral binder composition according to claim 13 and where water is present. or obtained by curing a mineral binder composition according to claim 14.
